# EUROPEAN PATENT APPLICATION

(11) **EP 2 497 804 A1**
(43) Date of publication of application: **12.09.2012**
(21) Application number: 12158248.0
(22) Date of filing: 06.03.2012
(51) Int. Cl.: C09J 7/02

(54) **Double-sided pressure-sensitive adhesive sheet with polyester-polyurethane containing anchor layer**

(30) Priority: 09.03.2011 JP 2011052073
(71) Applicant: Nitto Denko Corporation, Ibaraki-shi, Osaka 567-8680 (JP)
(72) Inventor: Ootake, Hironao, Osaka, 567-8680 (JP); Takahashi, Akiko, Osaka, 567-8680 (JP); Shirai, Mitsuyoshi, Osaka, 567-8680 (JP)
(74) Representative: Grünecker, Kinkeldey, Stockmair & Schwanhäusser

(57) **Abstract**

A pressure-sensitive adhesive sheet according to the present invention is a double-sided pressure-sensitive adhesive sheet having a plastic substrate and pressure-sensitive adhesive layers provided on each side thereof. The pressure-sensitive adhesive layers are formed from a water-dispersed pressure-sensitive adhesive composition having an acrylic polymer dispersed in an aqueous solvent. An anchor layer formed from an anchor composition containing polyester-polyurethane dissolved in an organic solvent is provided between at least a first side of the substrate and the pressure-sensitive adhesive layer.

## Description

### CROSS-REFERENCE

The present application claims priority based on Japanese Patent Application No. 2011-052073 filed on March 9, 2011, the contents of which are incorporated herein in its entirety by reference.

### BACKGROUND OF THE INVENTION

### 1. Field of the Invention

The present invention relates to a double-sided pressure-sensitive adhesive (PSA) sheet provided with a PSA layer formed from a water-dispersed acrylic PSA composition on a plastic substrate.

### 2. Description of the Related Art

In various industrial fields from home appliance products to automobiles and OA equipments, PSA sheets that comprise a substrate and are adherent on two sides (double-sided PSA sheets) are being widely used as bonding means having adequate workability and high reliability of adhesion. Acrylic polymers are preferably used as PSA constituent. As technical references regarding acrylic PSAs, Japanese Patent Application Publication No. 2005-023293 and Japanese Patent Application Publication No. H7-133467 may be cited. Japanese Patent Application Publication No. 2000-109754 is a technical reference regarding a coating composition, which, by being pre-applied onto the surface of an adherend, improves the adhesiveness of a PSA sheet with respect to the adherend.

### SUMMARY OF THE INVENTION

Meanwhile, from such points of view as consideration for the environment and reducing the amount of volatile organic compounds (VOCs) released from PSAs, the tendency is to prefer the use of a water-dispersed (aqueous) PSA composition, a morphology in which a PSA constituent is dispersed in water, alternatively to a PSA composition, a morphology in which a PSA constituent is contained in an organic solvent (solvent-type PSA composition). Consequently, it would be useful to provide a double-sided PSA sheet having a PSA layer formed from a water-dispersed PSA composition (hereinafter also referred to as "water-dispersed PSA layer"), which may realize performances that are comparable or superior to those of a double-sided PSA sheet using a PSA composition of the solvent-type (hereinafter also referred to as "solvent-type PSA layer").

However, in general, anchoring ability (anchoring strength, tight adhesiveness and the like) against a substrate tends to be weak for a PSA layer that is formed from a water-dispersed acrylic PSA composition compared to a solvent-type PSA layer. In particular, anchoring ability is often insufficient for a double-sided PSA sheet in which a plastic substrate (typically, a plastic film) is used, compared to a double-sided PSA sheet in which a paper substrate, or the like, is used. For this reason, with a double-sided PSA sheet provided with a water-dispersed PSA layer over a plastic substrate, when the PSA sheet is bonded along a non-planar portion (in particular, a curved surface bent inward, a corner, an edge, or the like) of an adherend, peeling sometimes occurs in a mode in which the PSA layer on the adherend side and the substrate become separated (anchor-detachment). For instance, the anchor-detachment often occurs when the double-sided PSA sheet is used in a mode in which an elastic material (elastic foam sheet such as of urethane foam, a rubber sheet, or the like) is immobilized along the non-planar shape of an adherend (that is to say, when the first PSA side of the double-sided PSA sheet is bonded to the elastic material and the second PSA side to the non-planar portion of the adherend), or the like.

As a method for increasing the anchoring ability of PSA against a plastic substrate, a method whereby the quality of the surface of the substrate is improved by corona discharge treatment or the like, is known. However, according to examination by the present inventors, there are cases where sufficient anchoring ability is difficult to realize even by such corona discharge treatment, or the like.

An object of the present invention is to provide a double-sided PSA sheet, which anchoring ability with respect to plastic substrate is improved, while being provided with a PSA layer comprising a water-dispersed acrylic PSA composition.

The present inventors discovered that, by intercalating an anchor layer having a predetermined composition between a plastic substrate and a PSA layer, the anchoring ability of a water-dispersed PSA layer may be improved, and completed the present invention.

One double-sided PSA sheet disclosed herein has a plastic substrate and a PSA layer provided on each side of the substrate. The PSA layer is formed from a water-dispersed PSA composition having an acrylic polymer dispersed in an aqueous solvent. An anchor layer formed from an anchor composition containing polyester-polyurethane dissolved in an organic solvent is provided between at least a first side and the PSA layer of the substrate. A double-sided PSA sheet having such a constitution allows the anchoring ability of the PSA layer toward a substrate to be improved widely, by way of the anchor layer. In addition, since a PSA layer formed from a water-dispersed PSA composition, is provided, the burden on the environment can be suppressed compared to a double-sided PSA sheet provided with a PSA layer formed from a solvent-type PSA composition. The thickness of the anchor layer is preferably about 0.01 µm or greater but less than 3.00 µm.

In one mode of the art disclosed herein, the anchor composition contains a constituent (A): a cross-linking compound having one, two or more species of functional groups selected from an epoxy group, a carboxyl group, an amino group and an amide group for a total of two or more per molecule. An anchor layer of such a composition may realize a more satisfactory anchoring ability improvement effect.

In another mode of the art disclosed herein, the anchor composition contains a constituent (B): at least one among a chlorinated polyethylene and a chlorinated polypropylene. An anchor layer of such a composition may realize a more satisfactory anchoring ability improvement effect.

In another mode of the art disclosed herein, the anchor composition contains a constituent (C); polychloroprene. An anchor layer of such a composition may realize a more satisfactory anchoring ability improvement effect.

In one preferred mode, the anchor composition contains, in addition to the polyester-polyurethane, at least two constituents among the constituents (A) to (C) (for instance, constituents (A) and (B), constituents (B) and (C), or constituents (A) and (C)). An anchor layer of such a composition may realize a better anchoring ability improvement effect. For instance, an anchor composition containing all of polyester-polyurethane, constituent (A), constituent (B) and constituent (C) may be preferably adopted.

The art disclosed herein may be applied preferably to a double-sided PSA sheet using a plastic film as the substrate preferably. For instance, a plastic film having a surface comprising a polymer material having polyester, polyolefin, polyphenylene sulfide or polyimide as a main constituent may be preferably adopted. For such a plastic film, exerting anchoring ability based on physical entanglement between the substrate and the PSA is difficult compared to a porous substrate such as non-woven fabric. Consequently, applying the present invention to improve anchoring ability is particularly significant.

The present specification provides in addition a method for preparing a double-sided PSA sheet. This method includes preparing a plastic film serving as a substrate. In addition, it includes providing on at least a first side of the substrate an anchor composition containing polyester-polyurethane dissolved in an organic solvent and forming an anchor layer (typically, an anchor layer having a thickness of 0.01 µm or greater but less than 3.00 µm) on the substrate. In addition, it includes providing on each side of the substrate where the anchor layer has been formed a PSA layer formed from a water-dispersed PSA composition having an acrylic polymer dispersed in an aqueous solvent. A double-sided PSA sheet prepared by such a method may have widely improved anchoring ability toward the substrate of the PSA layer. In addition, since the PSA layer is formed using a water-dispersed PSA composition, there is little burden on the environment, which is desirable. The method is desirable as a method for preparing any of the double-sided PSA sheet disclosed herein.

As anchor compositions used in the method, those containing at least one among the constituents (A) to (C) described above may be preferably adopted. Among these, the composition may contain two constituents (for instance, constituents (A) and (B), constituents (B) and (C), or constituents (A) and (C)), or the composition may contain all of constituents (A), (B) and (C).

### BRIEF DESCRIPTION OF THE DRAWINGS

Fig. 1 is a cross-sectional view showing schematically one constitution example of PSA sheet according to the present invention; and
Fig. 2 is a cross-sectional view showing schematically another constitution example of PSA sheet according to the present invention.

### DETAILED DESCRIPTION OF THE INVENTION

In the following, preferred embodiments of the present invention will be described. Note that something that is other than the matters expressly referred to herein, which is something that is necessary to carry out the present invention, may be understood to be a design matter of a person having ordinary skill in the art, based on prior art in the relevant field. The present invention can be carried out based on the contents disclosed in this description and the technical knowledge in the relevant field.

### <Overall constitution>

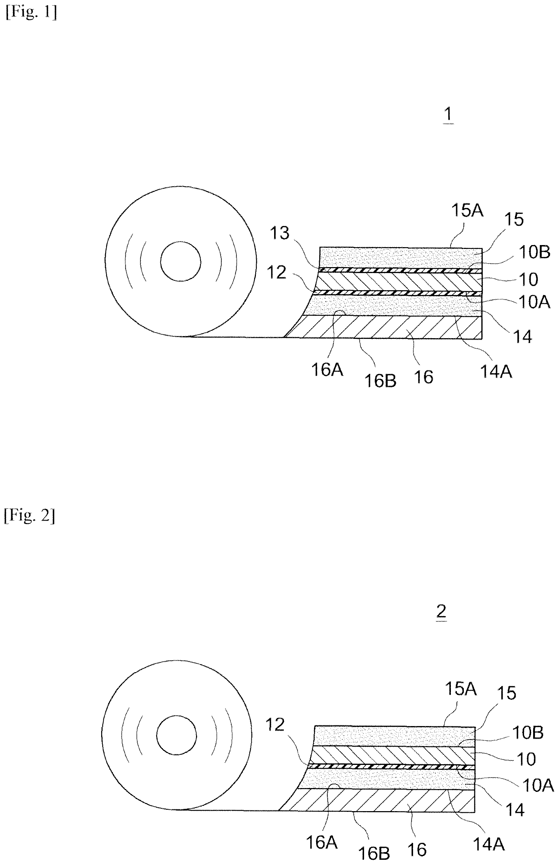

An exemplary constitution of the double-sided PSA sheet disclosed herein is shown in Fig. 1. This PSA sheet 1 has a two-adhesive side morphology, in which anchor layers 12 and 13 are provided respectively on a first side 10A and a second side 10B of a plastic substrate 10, and PSA layers 14 and 15 being further provided on each of the anchor layers 12 and 13. The surface (PSA side) 14A of the PSA layer 14 is protected by a release liner 16, of which both sides are release sides (surfaces that can be peeled from the PSA layer) 16A and 16B, such that, when this is rolled, the surface (PSA side) 15A of the PSA layer 15 also protected by the release liner16.

Another exemplary constitution of the double-sided PSA sheet disclosed herein is shown in Fig. 2. In this PSA sheet 2, on a first side 10A of a plastic substrate 10, an anchor layer 12 is provided, and a PSA layer 14 is provided thereon. Meanwhile, no anchor layer is provided on a second side 10B of the plastic substrate 10, and a PSA layer 15 is provided directly on this second side 10B. The point that both PSA sides 14A and 15A are protected by release sides 16A and 16B of a release liner 16 is similar to the PSA sheet 1. Or, the constitution may be such that a PSA layer 14 is provided directly (not via an anchor layer) on a first side 10A of a plastic substrate 10, and a PSA layer 15 is provided on a second side 10B via an anchor layer.

In the PSA sheet 1 shown in Fig. 1, the composition, thickness, forming method, and the like, of the anchor layers 12 and 13 may be identical or may be different. In the PSA sheets 1 and 2 shown in Figs. 1 and 2, the composition, thickness, forming method, and the like, of the PSA layers 14 and 15 may be identical or may be different. In addition, in the PSA sheets 1 and 2 shown in Figs. 1 and 2, either or both of the first side 10A and the second side 10B of the substrate 10 may remain untreated, or an appropriate surface quality improvement treatment may have been applied on the sides prior to forming an anchor layer or a PSA layer. As a variation example of the PSA sheets 1 and 2 shown in Figs. 1 and 2, a constitution in which both PSA sides 14A and 15A are protected by different (two) release liners may be cited. In this case, of the release liners protecting each of the PSA sides 14A and 15A, only the side in contact with the PSA side may be a release side, or both sides may be release sides.

### <Plastic substrate>

As plastic substrate in the art disclosed herein, at least the surface portion of the substrate may be a film, a foam sheet, a non-woven fabric, a woven fabric, or the like, formed from a polymer material. The polymer material may be a material containing one, two or more species of polymers, for instance, polyester (polyethylene terephthalate and the like), polyolefin (polyethylene (PE), polypropylene (PP), ethylene-propylene copolymer and the like), polyphenylene sulfide, polyimide, polyether imide, aromatic polyether ketone (polyether ketone (PEK), polyether ether ketone (PEEK) and the like), polyamide (nylon, aramide and the like), polyacetate, polyurethane, polyvinyl acetate, ethylene-vinyl acetate copolymer (EVA), polyvinyl chloride, fluorine resin (polytetrafluoroethylene and the like), cellophane, vinylon, polyvinyl alcohol, acrylic resin, polycarbonate, polystyrene, various rubbers, and the like (typically, containing the polymer as a main constituent, that is to say, as a constituent occupying 50% by mass or more). The entirety of the substrate may be constituted by the polymer material.

In one preferred mode, the substrate is a plastic film. The plastic film may be a single-layer film containing one, two or more species of polymer materials such as described above (for instance, polyester film), or may be a multi-layer film containing a plurality of layers comprising different materials. Such a plastic film may be undrawn or may have been drawn (uniaxially drawn, biaxially drawn, and the like). A single-layer or multi-layer plastic film of which at least the surface portion is constituted by a polymer material having polyester, polyolefin, polyphenylene sulfide or polyimide as the main constituent may be preferably adopted.

As plastic substrates that may be preferably adopted from such points of view as dimensional stability, economy (cost), processability and tensile strength, polyester films are indicative examples. As polyester films, a variety of films comprising a polymer material having polyester as the main constituent formed into a film can be used. Here, polyester refers to a polycondensate of a multivalent carboxylic acid and a multivalent alcohol (typically, a dicarboxylic acid and a diol). As preferably used polyesters, polyethylene terephthalate (PET), polyethylene naphthalate (PEN), polybutylene terephthalate and the like are given as examples. Among these, the use of a PET film is desirable.

The thickness of the substrate is not limited in particular and may be selected suitably according to the type of the substrate (material quality, morphology and the like), the application of the PSA sheet, or the like. For instance, a substrate of on the order of 1 µm to 5 mm (typically, 1 µm to 1 mm) in thickness can be adopted. In the case of a plastic film substrate, in general, it is adequate that the thickness of the substrate is on the order of 1 µm to 300 µm, and preferably on the order of 1 µm to 250 µm (more preferably 1 µm to 100 µm, for instance, 5 µm to 50 µm). If the thickness of the substrate is too small, the strength of the substrate is too low, sometimes tending to decrease the handling ability of the double-sided PSA sheet (for instance, tearing and shredding occurring more readily at attaching time, re-detaching time, or the like). If the thickness of the substrate is too large, when bonding the sheet to a curved surface, the ability to follow the curved surface (contour-following ability) decreases, the sheet sometimes becoming readily peeled off.

The surface of such a substrate may have undergone a suitable surface quality improvement treatment prior to forming an anchor layer or a PSA layer, or may remain untreated. The surface quality improvement treatment may be a treatment for improving the anchoring ability of the anchor layer toward the substrate or the anchoring ability of the PSA layer toward the substrate. As preferred examples of such surface quality improvement treatment, corona discharge treatment, plasma treatment and ITRO treatment may be cited. Here, ITRO treatment indicates the generality of the surface quality improvement treatments for forming a silicon oxide film of nanometer order on the substrate surface by combustion chemical vapor deposition (CCVD). In a constitution having an anchor layer on each side of the substrate (on both the first side and the second side), identical or different surface quality improvement treatments (refers to at least one of either the type or the extent of the treatment being different) may have been applied on each side of the substrate, or a surface quality improvement treatment may have been applied to a first side only. In a constitution having an anchor layer only on the first side of the substrate, identical or different surface quality improvement treatments may have been applied on each side of the substrate, the surface quality improvement treatment may have been applied only on the side where the anchor layer is formed, the surface quality improvement treatment may have been applied only on the side where no anchor layer is formed (that is to say, the side where a PSA layer is formed directly on the substrate). In addition, to an extent that the effects of the present invention are not lost significantly, one side or both sides of the substrate may have been printed or colored, or the like.

### <Anchor layer>

An anchor layer is provided on at least a first side of the substrate. This anchor layer contains at least polyester-polyurethane. The concept of "anchor layer containing polyester-polyurethane" referred to here includes: an anchor layer containing a blend of polyester and polyurethane; an anchor layer containing a polyester polyurethane (that is to say, a polymer containing an ester bond and a urethane bond; for instance, a polyester polyurethane obtained by a reaction between a polyester and a multivalent isocyanate compound, or the like); an anchor layer containing, in addition to such a polyester polyurethane, either or both of polyester and polyurethane; and the like. The amount of polyester-polyurethane contained in the anchor layer may be, for instance, 15 to 85% by mass of the entirety of the anchor layer. If the content in polyester-polyurethane is excessive, the strength of the anchor layer may become insufficient and the anchor layer per se becomes prone to provoking cohesive failure. In addition, tight adhesiveness with the PSA layer may become insufficient and the PSA sheet becomes prone to peeling between the PSA layer and the anchor layer. Meanwhile, if the content in polyester-polyurethane is too little, due to the elastic modulus of the anchor layer becoming too high, or the like, when the PSA sheet is deformed, the deformation may be difficult to follow for the anchor layer and the anchor layer be prone to being peeled off from the substrate.

The multivalent carboxylic acid constituting the polyester or polyester polyurethane described above may be one, two or more species selected from various multivalent carboxylic acids, and derivatives thereof, which are generally known as ones that may be used in the synthesis of a polyester. As preferred examples, aliphatic or alicyclic dibasic acids and derivatives thereof (hereinafter may also be referred to as "aliphatic or alicyclic dicarboxylic acids") may be cited. As concrete examples, adipic acid, azelaic acid, dimer acids (refers to dicarboxylic acids having a structure in which an unsaturated fatty acid is dimerized; as representative examples, dicarboxylic acids having a structure in which an unsaturated fatty acid having 18 carbons such as oleic acid, linoleic acid and linolenic acid are dimerized, may be cited), sebacic acid, 1,4-cyclohexane dicarboxylic acid, 1,3-cyclohexane dicarboxylic acid, 1,2-cyclohexane dicarboxylic acid, 4-methyl-1,2-cyclohexane dicarboxylic acid, dodecenyl succinic anhydride, fumaric acid, succinic acid, dodecane diacid, hexahydrophthalic anhydride, tetrahydrophthalic anhydride, and the like, maleic acid, maleic anhydride, itaconic acid, citraconic acid, and the like, may be cited. As a preferred example, adipic acid may be cited.

As other examples of multivalent carboxylic acid, aromatic dibasic acids and derivatives thereof (anhydrides, alkyl esters and the like; hereinafter may be referred to as "aromatic dicarboxylic acids") may be cited. As concrete examples of aromatic dibasic acid, terephthalic acid, isophthalic acid, orthophthalic acid, 1,5-naphthalene dicarboxylic acid, 2,6-naphthalene dicarboxylic acid, 4,4'-diphenyl dicarboxylic acid, 2,2'-diphenyl dicarboxylic acid, 4,4'-diphenylether dicarboxylic acid, and the like, may be cited.

The multivalent alcohols constituting the polyester or polyester polyurethane described above may be one, two or more species selected from various multivalent alcohols, which are generally known as ones that may be used in the synthesis of a polyester. As preferred examples, aliphatic or alicyclic diols may be cited. As concrete examples, ethylene glycol, 1,2-propylene glycol, 1,3-propanediol, 2-methyl-1,3-propanediol, 1,2-butanediol, 1,3-butanediol, 1,4-butanediol, 1,5-pentanediol, 1,6-hexanediol, 3-methyl-1,5-pentanediol, neopentyl glycol, diethylene glycol, dipropylene glycol, 2,2,4-trimethyl-1,5-pentanediol, 2-ethyl-2-butyl propanediol, 1,9-nonanediol, 2-methyl octanediol, 1,10-decanediol, and the like, may be cited. As on preferred example, 1,6-hexanediol may be cited. As one preferred example of anchor layer disclosed herein, an anchor layer containing polyester-polyurethane, which contains a polyester structure portion by way of polycondensation between adipic acid and 1,6-hexanediol, may be cited.

The isocyanate group forming a urethane bond in the anchor layer may be one derived from various multivalent isocyanate compounds. The multivalent isocyanate compound described above may be one, two or more species selected from various compounds, which are generally known as ones that may be used in the synthesis of polyurethane or polyester polyurethane. For instance, aromatic isocyanates such as tolylene diisocyanate and xylene diisocyanate; alicyclic isocyanates such as isophorone diisocyanate; aliphatic isocyanates such as hexamethylene diisocyanate; and the like, may be cited. More concretely: lower aliphatic polyisocyanates such as butylene diisocyanate and hexamethylene diisocyanate; alicyclic isocyanates such as cyclo-pentylene diisocyanate, cyclohexylene diisocyanate and isophorone diisocyanate; aromatic diisocyanates such as 2,4-tolylene diisocyanate, 2,6-tolylene diisocyanate, 4,4'-diphenylmethane diisocyanate and xylylene diisocyanate; isocyanate adducts such as trimethylol propane/tolylene diisocyanate trimer adduct, trimethylol propane/hexamethylene diisocyanate trimer adduct and isocyanurate of hexamethylene diisocyanate; and the like, can be indicated as examples. As one preferred example, 2,4-tolylenediisocyanate and 2,6-tolylenediisocyanate may be cited. A mixture containing these in any proportion (for instance, a mixture containing 2,4-tolylene diisocyanate and 2,6-tolylene diisocyanate in mass ratios of 70:30 to 90:10) is also adequate.

The fact that the anchor layer contains polyester-polyurethane may be appreciated, for instance, in an FT-IR analysis (Fourier transform infrared spectroscopy) by the ATR (attenuated total reflection) method, by observing peaks belonging to urethane bonds and ester bonds. In addition, it may also be appreciated by carrying out one, two or more among 13C-NMR, 1H-NMR and FT-IR analyses (in one preferred mode, all of three of these) for the decomposition products from the anchor layer, which has been immersed in methanol and heat-treated.

The anchor layer of the art disclosed herein is formed typically using an anchor composition comprising the polyester-polyurethane dissolved in an organic solvent. As organic solvents, those adequately dissolving polyester-polyurethane and other constituents, which are used as necessary, can be adopted suitably. For instance, aromatic hydrocarbons such as toluene, benzene and xylene; aliphatic or alicyclic hydrocarbons such as n-hexane, n-octane and cyclohexane; open chain or cyclic ketones such as methyl ethyl ketone, methyl isobutyl ketone and cyclohexanone; alcohols such as methanol, ethanol, isopropyl alcohol, ethylene glycol and ethylene glycol monobutyl ether; open chain or cyclic ethers such as diethyl ether, tetrahydrofuran, dioxane; esters such as ethyl acetate and butyl acetate; and the like, can be used. Of such organic solvents, one species may be used alone, or two or more species may be used in combination. In one preferred mode, 50% by mass or more (for instance, 60% by mass or more) among the organic solvents contained in the anchor composition is an aromatic hydrocarbon (for instance, toluene). By way of an anchor composition having such a composition, an anchor layer may be formed with more excellent transparency. In addition, a higher anchoring ability improvement effect may be exerted. For instance, a double-sided PSA sheet may be realized, demonstrating higher anchoring strength in the anchoring ability evaluation described below.

In one preferred mode, the anchor composition (and by extension, the anchor layer formed from the composition) contains a modified polyolefin (modified polyethylene, modified polypropylene, or the like). As a representative example of modified polyolefin, chlorinated polyolefin may be cited. It may be a chlorinated polyolefin containing a polyolefin chain graft-modified with an acid (that is to say, acid-modified type chlorinated polyolefin), or it may be a chlorinated polyolefin with no such acid modification (unmodified type). The olefin polymer (raw material) subjected to chlorination is typically an olefin polymer having as the main monomer an α-olefin having on the order of 2 to 10 carbons. It may be homopolymer of such an α-olefin (homopolyethylene, homopolypropylene, or the like), it may be a copolymer of two or more species of α-olefin (ethylene-propylene copolymer, ethylene-propylene-butene copolymer, or the like), or it may be a copolymer of one, two or more species of α-olefin and another monomer. The anchor layer may contain one species of such modified polyolefin alone, or may contain two or more species in a suitable combination. As preferred chlorinated polyolefins, chlorinated polyethylenes (chlorinated PE) based on olefin polymers having ethylene as the main monomer and chlorinated polypropylenes (chlorinated PP) based on olefin polymers having propylene as the main monomer may be cited. For instance, an anchor composition containing either or both of chlorinated PE and chlorinated PP may be preferably adopted. When the anchor layer contains a modified polyolefin (typically, contains either or both of chlorinated PE and chlorinated PP), the content in the modified polyolefin may be, for instance, 15 to 85% by mass of the entirety of the anchor layer. If the content in modified polyolefin is excessive, due to the elastic modulus of the anchor layer becoming too high, or the like, when the PSA sheet is deformed, the deformation may be difficult to follow for the anchor layer and the anchor layer be prone to being peeled off from the substrate. Meanwhile, if the content in modified polyolefin is too little, tight adhesiveness with the PSA layer may become insufficient and the PSA sheet become prone to peeling between the PSA layer and the anchor layer.

The anchor composition (and by extension, the anchor layer formed from the composition) may contain a polymer constituent other than polyester-polyurethane and modified polyolefin. As such a polymer constituent, a polymer having the qualities of rubber or elastomer can be preferably adopted. For instance, ethylene-vinyl acetate copolymer, acrylic rubber, natural rubber (NR), isoprene rubber (IR), styrene butadiene rubber (SBR), polychloroprene (also referred to as CR; chloroprene rubber), isobutylene-isoprene rubber (IIR), ethylene propylene rubber (EPM,EPDM), polyisobutylene, styrene-ethylenebutylene-styrene copolymer (SEBS), acrylonitrile-butadiene copolymer (NBR), styrenebutadiene-styrene block copolymer (SBS), styrene-isoprene-styrene block copolymer (SIS), polyvinyl alkyl ether (for instance, polyvinyl isobutyl ether), polyvinyl chloride, polyvinyl acetate, polyvinyl chloride-vinyl acetate copolymer, and the like, may be cited. Among these, one species may be used alone, or two or more species may be used in combination. For instance, an anchor composition containing one, two or more species selected from among polychloroprene, polyvinyl chloride, polyvinyl acetate and polyvinyl chloride-vinyl acetate copolymer is desirable. As a desirable polymer constituent among these, polychloroprene is illustrative. As another desirable polymer constituent, the combination of polychloroprene and polyvinyl chloride-vinyl acetate copolymer is illustrative. When the anchor layer contains a polymer constituent other than polyester-polyurethane and modified polyolefin, the content in the polymer constituent can be, for instance, 20% by mass or less (typically, 0.1 to 20% by mass, for instance, 1 to 10% by mass) of the entirety of the anchor layer.

In one preferred mode, the anchor composition contains a cross-linking compound. Such a cross-linking compound may be a compound having one, two or more species of functional group selected from, for instance, epoxy group, carboxyl group, isocyanate group, hydroxyl group, amino group, amide group and carbodiimide group, for a total of two or more per molecule. As concrete examples of such cross-linking compound, product names "TETRAD-C" and "TETRAD-X" manufactured by Mitsubishi Gas Chemical Company, Inc., product names "jER878", "jER1256" and "jER152" manufactured by Mitsubishi Chemical Corporation, product names "CORONATE L", "CORONATE HX" and "CORONATE HL" manufactured by Nippon Polyurethane Industry Co., Ltd., 1,6-hexane diol manufactured by Ube Industries, Ltd., product name "CARBODILITE V-01" manufactured by Nissinbo Chemical Inc., and the like, may be cited. Of such cross-linking compounds, one species alone, or two or more species in suitable combination can be used. Among these, using a cross-linking compound having two or more epoxy groups within one molecule is desirable. As one preferred example of such cross-linking compound, bisphenol A-type epoxy resin may be cited. When the anchor composition contains a cross-linking compound, the content thereof can be, for instance, about 15% by mass or less of the entirety of the anchor layer.

As one preferred example of the anchor composition in the art disclosed herein, an anchor composition containing at least one constituent (preferably, two constituents or more) of the following constituents in addition to polyester-polyurethane may be cited: a cross-linking compound having one, two or more species of functional groups selected from an epoxy group, a carboxyl group, an amino group and an amide group for a total of two or more per molecule (constituent (A)); at least one among a chlorinated polyethylene and a chlorinated polypropylene (constituent (B)); and polychloroprene (constituent (C)). For instance, an anchor composition containing all the constituents (A), (B) and (C) in addition to polyester-polyurethane can be adopted preferably.

To the extent that the effects of the present invention are not lost significantly, various additives, or the like, such as surfactant, thickener, stabilizer, antifoaming agent and colorant (pigment, dye and the like) can be included as necessary in the anchor composition.

Such an anchor composition can be prepared using, for instance, product name "RC-1023", a chemical available from LORD Far East, Inc. For instance, the "RC-1023" diluted to an appropriate solid content concentration (for instance, a solid content concentration of on the order of 0.05 to 5% by mass) by adding an organic solvent can be adopted preferably as the anchor composition in the art disclosed herein. As preferred examples of organic solvent that may be used for the dilution, aromatic hydrocarbons (for instance toluene), open chain or cyclic ketones (for instance methyl ethyl ketone), mixed solvents thereof, and the like, may be cited.

As a method for forming an anchor layer from such an anchor composition, the method of applying (typically, coating) the composition directly onto the substrate and drying can be adopted preferably. Coating of the anchor composition onto the substrate can be carried out using a well-known or commonly used applicator, such as a Meyer bar, a spray coater, a fountain die coater, a lip coater, a closed-edge die coater, a gravure roll coater, a reverse roll coater, a kiss roll coater, a dip roll coater, a bar coater or a knife coater.

Regarding the thickness of the anchor layer (thickness after drying, that is to say, dry film thickness), in general about 0.01 µm or greater but less than 3.00 µm is adequate, and about 0.05 µm or greater but less than 2.00 µm (for instance about 0.10 µm or greater but less than 1.00 µm) is desirable. If the thickness of the anchor layer is too small, sometimes a sufficient anchoring ability improvement effect becomes difficult to realize. Meanwhile, anchoring ability of the PSA layer with respect to the substrate also decreases sometimes when the thickness of the anchor layer is too large. The reason is thought to be that, if the thickness of the anchor layer is too large, when the double-sided PSA sheet is deformed, the deformation is difficult to follow for the anchor layer (for instance, a crack occurs in the anchor layer) and the anchor layer is prone to being peeled off from the substrate, or the like. In addition, since the anchor composition contains an organic solvent, it is desirable to avoid increasing the thickness of the anchor layer excessively also from the point of view of reducing the amount of the organic solvent used and the amount of VOCs released from the PSA sheet.
The thickness of the anchor layer can be appreciated by observing a cross section of the PSA sheet with a transmission electron microscope (TEM). For instance, a heavy metal staining (for instance, ruthenic acid staining) treatment is carried out with the purpose of bringing out the anchor layer, then, resin embedding is carried out, and a TEM observation of a sample cross section prepared by the ultramicrotome method is carried out, of which the obtained result can be adopted preferably as the thickness of the anchor layer in the art disclosed herein. As the TEM, the transmission electron microscope manufactured by Hitachi, model "H-7650", or the like, can be used.

The solid content concentration of the anchor composition (that is to say, the amount of anchor layer-forming constituent within the anchor composition) can be, for instance, on the order of 0.01 to 10% by mass, and in general, on the order of 0.05 to 5% by mass is adequate. If this solid content concentration is too high, forming a thin, uniform anchor layer may sometimes become difficult. In addition, it is desirable to avoid reducing the solid content concentration of the anchor composition excessively from the point of view of reducing the amount of organic solvent used and the amount of VOCs released from the PSA sheet.

### <PSA layer>

In the art disclosed herein, the water-dispersed PSA composition used for forming the PSA layer contains an acrylic polymer dispersed in an aqueous solvent (water-dispersed acrylic polymer). This water-dispersed acrylic polymer is an acrylic polymer composition in emulsion form in which an acrylic polymer is dispersed in water. In a typical mode according to the technology disclosed herein, the acrylic polymer is used as base polymer of PSA (basic component of PSA) to constitute the PSA layer. For instance, it is desirable that 50% by mass or greater of the PSA is acrylic polymer. As such acrylic polymer, one having alkyl (meth)acrylate as the main monomer (main monomeric constituent of monomeric constituents, that is to say, a constituent occupying 50% by mass or greater of the total amount of monomers constituting the acrylic polymer) may be used preferably.

Note that herein, "(meth)acrylate" is meant to indicate acrylate and methacrylate comprehensively. Similarly, meant to indicate comprehensively are, respectively, "(meth)acryloyl" for acryloyl and methacryloyl, and "(meth)acrylic" for acrylic and methacrylic.

As alkyl (meth)acrylates, for instance, compounds represented by the following formula (1) can be used suitably:

CH₂ = C(R¹)COOR² (1)

Here, R¹ in the formula (1) represents a hydrogen atom or a methyl group. In addition, R² represents an alkyl group having 1 to 14 carbon atoms (preferably 1 to 10 carbon atoms).

As concrete examples of alkyl (meth)acrylates, methyl (meth)acrylate, ethyl(met)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl(meth)acrylate, isoamyl (meth)acrylate, neopentyl (meth)acrylate, hexyl (meth)acrylate, heptyl (meth)acrylate, octyl (meth)acrylate, isooctyl (meth)acrylate, 2-ethyl hexy (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, and the like may be cited. As particularly desirable examples, butylacrylate (BA) and 2-ethylhexylacrylate (2EHA) are given as examples.

Of these alkyl (meth)acrylates, one species alone, or two or more species can be used in combination. For instance, the alkyl (meth)acrylate constituting the above acrylic polymer may be butyl acrylate (BA) alone, may be 2-ethylhexyl acrylate (2EHA) alone, or may be both species of BA and 2EHA. When BA and 2EHA are used in combination as alkyl (meth)acrylate, there is no particular limitation on their ratio. For instance, it is possible to adopt preferably a composition in which, of the total amount of BA and 2EHA, 45% by mass or more but less than 100% by mass (for instance, 40% by mass to 95% by mass) is BA, and the remainder is 2EHA.

As monomers constituting the acrylic polymer, other monomers that are co-polymerizable with alkyl (meth)acrylate (sometimes may be referred to as "co-polymerizing monomer constituent") may be used in such a range that alkyl (meth)acrylate is the main constituent. The proportion of alkyl (meth)acrylate with respect to the total amount of monomers constituting the acrylic polymer may be on the order of 80% by mass or greater (typically 80 to 99.8% by mass) and preferably 85% by mass or greater (for instance 85 to 99.5% by mass). The proportion of alkyl (meth)acrylate may be 90% or more by mass or greater (for example, 90 to 99% by mass).

These co-polymerizable monomers may be useful for introducing a crosslinking site into the acrylic polymer or for increasing the cohesive strength of the acrylic polymer. Such co-polymerizable monomer can be used alone or by combining two species or more.

More particularly, as co-polymerizable monomers for introducing a crosslinking site into the acrylic polymer, various functional group-containing monomers (typically, a heat-crosslinking functional group-containing monomer for introducing a crosslinking site that crosslinks by heat into the acrylic polymer) can be used. By using such a functional group-containing monomer, the adhesive strength to the adherend may be increased. Such a functional group-containing monomer suffices to be a monomer that is co-polymerizable with alkyl (meth)acrylate and may provide a functional group that is a crosslinking site, and is not limited in particular. For instance, functional group-containing monomers such as the following can be used, alone or by combining two species or more.

Carboxyl group-containing monomers: for instance, ethylenic unsaturated monocarboxylic acids such as acrylic acid, methacrylic acid and crotonic acid; ethylenic unsaturated dicarboxylic acids such as maleic acid, itaconic acid and citraconic acid, and anhydrides thereof (such as anhydrous maleic acid and anhydrous itaconic acid).
Hydroxyl group-containing monomers: for instance, hydroxyalkyl (meth)acrylates such as 2-hydroxyethyl (meth)acrylate, 2-hydroxypropyl (meth)acrylate, 3-hydroxypropyl (meth)acrylate and 2-hydroxybutyl (meth)acrylate; and unsaturated alcohols such as vinyl alcohol and allyl alcohol.

Amide group-containing monomers: for instance, (meth)acrylamide, N,N-dimethyl (meth)acrylamide, N-butyl (meth)acrylamide, N-methylol (meth)acrylamide, N-methylol propane (meth)acrylamide, N-methoxy methyl (meth)acrylamide and N-butoxy methyl (meth)acrylamide.
Amino group-containing monomer: for instance, aminoethyl (meth)acrylate, N,N-dimethylaminoethyl (meth)acrylate and t-butylaminoethyl (meth)acrylate.

Monomers having an epoxy group: for instance, glycidyl (meth)acrylate, methylglycidyl (meth)acrylate and allyl glycidyl ether.
Cyano group-containing monomers: for instance, acrylonitrile and methacrylonitrile.
Keto group-containing monomers: for instance, diacetone (meth)acrylamide, diacetone (meth)acrylate, methyl vinyl ketone, ethyl vinyl ketone, allyl acetoacetate and vinyl acetoacetate.

Monomers having a nitrogen atom-containing ring: for instance, N-vinyl-2-pyrrolidone, N-methylvinyl-2-pyrrolidone, N-vinylpyridinium salt, N-vinylpiperidone, N-vinylpyrimidine, N-vinylpiperazine, N-vinyipyrazine, N-vinylpyrrole, N-vinylimidazole, N-vinyloxazole, N-vinylmorpholine, N-vinylcaprolactam and N-(meth)acryloylmorpholine.

Alkoxy silyl group-containing monomers: for instance, 3-(meth)acryloxypropyl trimethoxy silane, 3-(meth)acryloxypropyl triethoxy silane, 3-acryloxypropyl triethoxy silane, 3-(meth)acryloxypropyl methyldimethoxy silane and 3-(meth)acryloxypropyl methyldiethoxy silane.

The functional group-containing monomer constituent described above is preferably used in ranges of, for instance, on the order of 12 parts by mass or less (for instance, on the order of 0.5 to 12 parts by mass and preferably on the order of 1 to 8 parts by mass) with respect to 100 parts by mass of alkyl (meth)acrylate. If the amount of functional group-containing monomer constituent is too high, the cohesive strength becomes too high, which may tend to decrease the adhesive properties (for instance adhesive strength).

In one preferred aspect, one, two or more species selected from at least a carboxyl group-containing monomer is used as the functional group-containing monomer constituent. The amount of such carboxyl group-containing monomer can be, for instance, 0.5 to 10 parts by mass with respect to 100 parts by mass of alkyl (meth)acrylate, and in general 1 to 8 parts by mass (for instance, 2 to 6 parts by mass) is adequate. Essentially all of the functional group-containing monomer constituent may be a carboxyl group-containing monomer. Among these, as preferred carboxyl group-containing monomers, acrylic acid and methacrylic acid may be given as examples. One of these may be used alone or the acrylic acid and the methacrylic acid may be combined in any proportion and used.

In another preferred aspect, at least an alkoxysilyl group-containing monomer is used as the functional group-containing monomer constituent. The amount of such an alkoxysilyl group-containing monomer can be, for instance, 0.005 to 0.5 parts by mass with respect to 100 parts by mass of alkyl (meth)acrylate, and in general, 0.01 to 0.2 parts by mass (for instance, 0.02 to 0.1 parts by mass) is adequate. Essentially all of the functional group-containing monomer constituent may be carboxyl group-containing monomer and alkoxysilyl group-containing monomer.

In addition, in order to increase the cohesive strength of the acrylic polymer, aside from the functional group-containing monomers described above, other co-polymerizable constituents can be used. As such co-polymerizable constituents, for instance, vinyl esters such as vinyl acetate and vinyl propionate; aromatic vinyl compounds such as styrene, substituted styrene (such as α-methyl styrene) and vinyl toluene; non-aromatic ring-containing (meth)acrylates such as cycloalkyl (meth)acrylate [such as cyclohexyl (meth)acrylate and cyclopentyl di(meth)acrylate] and isobornyl (meth)acrylate; aromatic ring-containing (meth)acrylates such as aryl (meth)acrylate [for instance phenyl (meth)acrylate], aryloxy alkyl (meth)acrylate [for instance phenoxy ethyl (meth)acrylate] and arylalkyl (meth)acrylate [for instance benzyl (meth)acrylate]; olefins such as ethylene, propylene, isoprene, butadiene and isobutylene; chlorine-containing monomers such as vinyl chloride and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate, vinyl ethers such as methyl vinyl ether and ethyl vinyl ether; and the like, may be cited.

As other examples of co₋polymerizable monomers, monomers having a plurality of functional groups within a single molecule may be cited. Examples of such multifunctional monomer include 1,6-hexanediol di(meth)acrylate, ethyleneglycol di(meth)acrylate, diethyleneglycol di(meth)acrylate, triethyleneglycol di(meth)acrylate, tetraethyleneglycol di(meth)acrylate, (poly)ethyleneglycol di(meth)acrylate, propyleneglycol di(meth)acrylate, (poly)propyleneglycol di(meth)acrylate, neopentylglycol di(meth)acrylate, pentaerythritol di(meth)acrylate, trimethylol propane tri(meth)acrylate, pentaerythritol tri(meth)acrylate, dipentaerythritol hexa(meth)acrylate, glycerin di(meth)acrylate, epoxy acrylate, polyester acrylate, urethane acrylate, divinyl benzene, butyl di(meth)acrylate, hexyl di(meth)acrylate, and the like.

As methods for obtaining water-dispersed acrylic polymers by polymerizing such monomers, polymerization methods that are well known or in common use can be adopted, and preferably emulsion polymerization can be used. As methods for supplying monomers when carrying out emulsion polymerization, batch feeding method whereby the entirety of the monomers is supplied in a single batch, continuous supply (instillation) method, fractional provision (instillation) method, and the like, can be adopted suitably. A portion or the entirety of the monomers (typically, the entirety) is mixed and emulsified beforehand with water (typically, a suitable amount of emulsifier is used along with water), and the emulsion thereof (monomer emulsion) may be supplied into the reaction vessel in a single batch, gradually or fractionally. The polymerization temperature can be selected suitably according to the species of the monomer, the species of the polymerization initiator, and the like, to be used, and can be, for instance, on the order of 20°C to 100°C (typically 40°C to 80°C).

As polymerization initiators used during polymerization, it can be selected suitably according to the type of polymerization method from among polymerization initiators that are well known and in common use. For instance, in emulsion polymerization methods, azo (containing) polymerization initiators may be used preferably. Examples of azo initiators include 2,2'-azobisisobutylonitrile, 2,2'-azobis(2-methylpropionamidine) disulfate, 2,2'-azobis(2-amidino propane) dihydrochloride, 2,2'-azobis[2-(5-methyl-2-imidazoline-2-yl)propane] dihydrochloride, 2,2'-azobis(N,N'-dimethyleneisobutylamidine), 2,2'-azobis[N-(2-carboxyethyl)-2-methylpropionamidine] hydrate, 2,2'-azobis(4-methoxy-2,4-dimethylvaleronitrile), 2,2'-azobis(2,4-dimethylvaleronitrile), 2,2'-azobis(2-methylbutylonitrile), 1,1'-azobis(cyclohexane-1-carbonitrile), 2,2'-azobis(2,4,4-trimethylpentane), dimethyl-2,2'-azobis(2-methylpropionate), and the like.

As other examples of polymerization initiator, persulfates such as potassium persulfate and ammonium persulfate; peroxide initiators such as benzoyl peroxide, t-butyl hydroperoxide, di-t-butyl peroxide, t-butylperoxy benzoate, dicumyl peroxide, 1,1-bis(t-butylperoxy)-3,3,5-trimethyl cyclohexane, 1,1-bis(t-butylperoxy)cyclododecane and hydrogen peroxide; substituted ethane initiators such as phenyl-substituted ethane; aromatic carbonyl compounds; and the like, may be cited. As further other examples of polymerization initiators, redox initiators by combination of a peroxide and a reducing agent may be cited. Examples of such redox initiators include combination of a peroxide and ascorbic acid (such as combination of hydrogen peroxide water and ascorbic acid), combination of a peroxide and iron(II) salt (such as combination of hydrogen peroxide water and iron(II) salt), combination of a persulfate and sodium hydrogen sulfite, and the like.

Such polymerization initiators can be used alone or in a combination of two species or more. The amount of polymerization initiator used suffices to be an amount used conventionally, and can be selected from a range of, for instance, on the order of 0.005 to 1 parts by mass (typically 0.01 to 1 parts by mass) with respect to 100 parts by mass of monomer constituent.

Emulsifiers used when carrying out emulsion polymerization may be either of anionic emulsifiers and non-ionic emulsifiers. As anionic emulsifiers, for instance, sodium lauryl sulfate, ammonium lauryl sulfate, sodium dodecyl benzene sulfate, sodium polyoxyethylene alkyl ether sulfate, ammonium polyoxyethylene alkyl ether sulfate, ammonium polyoxyethylene alkyl phenyl ether sulfate, sodium polyoxyethylene alkyl phenyl ether sulfate, and the like, may be cited. As non-ionic emulsifiers, for instance, polyoxyethylene alkyl ether, polyoxyethylene alkyl phenyl ether, and the like, may be cited. Of such emulsifiers, one species can be used alone, or two or more species can be used in combination. The amount of emulsifier can be, for instance, on the order of 0.2 to 10 parts by mass (more preferably 0.5 to 5 parts by mass) with respect to 100 parts by mass of total monomer constituent.

In addition, when carrying out the emulsion polymerization, a chain transfer agent may be used in order to adjust the molecular weight of the acrylic polymer generated by the polymerization. As chain transfer agents, mercaptans such as, for instance, n-lauryl mercaptan, tertiary lauryl mercaptan, mercapto acetic acid, 2-mercaptoethanol, 2-ethylhexyl thioglycolate and 2,3-dimercapto-1-propanol can be used preferably. Of such chain transfer agents, one species can be used alone, or two or more species can be used in combination. The mixing amount of chain transfer agent can be, for instance, on the order of 0.001 to 0.5 parts by mass with respect to 100 parts by mass of monomer constituent.

With emulsion polymerization thus carried out, a polymerization reaction mixture is produced resultantly in the form of an emulsion in which an acrylic polymer is dispersed in water. As the water-dispersed acrylic polymer in the art disclosed herein, this polymerization reaction mixture or the reaction mixture after a suitable treatment can be used preferably. Alternatively, a polymerization method other than the emulsion polymerization method (for instance, solution polymerization, photopolymerization, bulk polymerization, and the like) may be used to synthesize the acrylic polymer, and use a water-dispersed acrylic polymer prepared by dispersing this polymer in water.

In addition to water-dispersed acrylic polymers, the PSA composition in the technique disclosed herein may further contain a tackifier. As tackifiers, for instance, various tackifiers such as rosins, terpens, hydrocarbons, epoxies, polyamides, elastomers, phenols and ketones can be used, with no particular limitation. Such tackifiers may be used alone or in a combination of one, two species or more. Moreover, these tackifiers may be used in an emulsion form in which the tackifiers are dispersed in water.

As one preferred example of the tackifier, stabilized rosin ester resin may be cited. As such rosin ester resin, for instance, a rosin ester can be used, which is obtained by stabilizing a rosin serving as a raw material by performing stabilization treatment such as disproportionation or hydrogen addition and purification treatment, and further esterifying with an alcohol. As commercial products of water-dispersed tackifier containing such a stabilized rosin ester resin, for instance, product names " Super Ester E-720" and " Super Ester E-730-55" manufactured by Arakawa Chemical, Inc., product names "HARIESTER SK-90D", "HARIESTER SK-70D", "HARIESTER SK-70E" and "NEOTALL 115E" manufactured by Harima Chemicals, Inc., and the like, may be cited.

As other preferred examples of the tackifier, terpene-phenol resins comprising a terpenic resin such as α-pinene polymer, β-pinene polymer or diterpene polymer that has been phenol-modified may be cited. As commercial products of terpene-phenol tackifier (may be in the form of an aqueous emulsion) that may be used preferably, product names "TAMANOL E-100", "TAMANOL E-200" and "TAMANOL E-200NT" manufactured by Arakawa Chemical Industries, Ltd., and the like, may be cited.

The amount of tackifier used is not limited in particular, and can be set suitably according to the target adhesive properties (adhesive strength or the like). For instance, the tackifier is preferably used at a proportion of on the order of 5 to 100 parts by mass (more preferably 10 to 60 parts by mass, and even more preferably 15 to 40 parts by mass) in solid content basis with respect to 100 parts by mass of acrylic polymer.

In the water-dispersed PSA composition described above, a crosslinking agent may be contained, as necessary. The type of crosslinking agent is not limited in particular, and can be selected suitably from among crosslinking agents that are well known or in common use (for instance, isocyanate crosslinking agents, epoxy crosslinking agents, oxazoline crosslinking agents, aziridine (containing) crosslinking agents, melamine crosslinking agents, peroxide crosslinking agents, urea crosslinking agents, metal alkoxide crosslinking agents, metal chelate crosslinking agents, metal salt crosslinking agents, carbodiimide crosslinking agents, amine crosslinking agents and the like) and used. As crosslinking agents used here, both oil-soluble and water-soluble can be used. A crosslinking agent can be used alone or by combining two species or more. The amount of crosslinking agent used is not limited in particular, and for instance, can be selected from a range on the order of 10 parts by mass or less (for instance, on the order of 0.005 to 10 parts by mass, and preferably on the order of 0.01 to 5 parts by mass) with respect to 100 parts by mass of acrylic polymer.

The PSA composition described above may contain, as necessary, an acid or a base (aqueous ammonia or the like) used for the purpose of pH adjustment or the like. As other optional constituents that may be included in the composition, various additives that are general in the field of aqueous PSA composition can be given as examples, such as viscosity adjuster (thickener or the like), leveling agent, release adjuster, plasticizer, softener, filler, colorant (pigment, dye and the like), surfactant, anti-electrostatic agent, antiseptic agent, anti-aging agent, UV absorber, antioxidant and light stabilizer.

In applying (typically, coating) the PSA composition, the same applicators as those for applying the anchor composition described above can be used. The thickness of the PSA layer (dry film thickness) is not limited in particular and may be, for instance, on the order of about 5 µm to 200 µm (typically, about 10 µm to 100 µm).

According to one preferred mode of the art disclosed herein, a double-sided PSA sheet may be realized, which, in the measurements or the evaluations described in the examples mentioned later, satisfies at least one (preferably two or more and more preferably all) of the following capabilities:
(a) the morphology of the detachment in the anchoring ability evaluation is an interface detachment (no anchor-detachment is provoked);
(b) in the cohesive strength test, the sample piece is retained on the adherend still after one hour has elapsed (more preferably, the distance of the shift after one hour has elapsed is less than 0.4 mm); and
(c) in the measurement of the amount of toluene released, the amount of toluene released is 5.0 µg/g or less (more preferably, less than 2.0 µg/g).
A double-sided PSA sheet that satisfies at least the property (a) and also either or both of properties (b) and (c) is desirable.

### EXAMPLES

Hereafter, a number of examples according to the present invention will be described; however, the present invention is not intended to be limited to those indicated in examples. Note that in the following description, mass is the criteria for "part" and "%" unless expressly indicated otherwise. In addition, in the following explanation, each property was measured or evaluated respectively in the following manner.

### <Thickness of the anchor layer>

A cut was performed along a straight line crossing a double-sided PSA sheet in the width direction (a direction perpendicular to the length direction), heavy metal staining (here, ruthenic acid staining) treatment was carried out with the purpose of bringing out the anchor layer, resin embedding was carried out, and a sample for cross section observation was prepared by the microtome method. The thickness of the anchor layer was measured by carrying out TEM observation of the sample cross section using a transmission electron microscope manufactured by Hitachi, model "H-7650".

### <Anchoring ability evaluation>

Two 25 µm-thick PET films (product name "Lumirror S10", manufactured by Toray Industries, Inc.) were readied. The release liner covering a first PSA side of a double-sided PSA sheet was peeled off and bonded to a first PET film for backing. This was cut to 20 mm in width and 100 mm in length, which served as a sample piece. As a primer agent (a coating agent that is pre-coated onto an adherend surface to increase the adhesiveness of a PSA sheet with respect to the adherend), product name "RC-1017" manufactured by LORD Far East, Inc., was spread over the second PET film with a waste cloth and left to dry for 30 minutes at room temperature. At 25°C, the release liner was peeled off from a second PSA side of the sample piece, adhered by hand to the primer agent-coated side of the second PET film and left overnight. The extremities in the longitudinal direction of both PET films were set in a tensile tester to peel by drawing at 25°C under the condition of 300 mm/min draw speed in a 90° direction, and the peeled state thereof was observed.

### <Cohesive strength test>

The release liner covering a first PSA side of a double-sided PSA sheet was peeled off and bonded to a 25 µm-thick PET film for backing. This backed PSA sheet was cut into a size of 10 mm in width and 100 mm in length to prepare as a sample piece. The release liner was peeled off from a second PSA side of the sample piece and the sample piece was pressure-bonded with an adhesive surface area of 10 mm in width and 20 mm in length to a bakelite plate serving as an adherend, by the method of causing a 2 kg roller to travel back and forth once. The sample piece bonded to the adherend in this way was left hanging under an environment of 80°C for 30 minutes, then, subjected to a load of 500 g at the free end of the sample piece and left in the loaded state under an environment of 80°C for one hour in accordance with JIS Z 0237. After one hour elapsed, if the sample piece had peeled and fallen from the adherend, the peeled state thereof was examined. If the sample piece was retained to the adherend still after one hour had elapsed, the distance (mm) of the shift of the sample piece from the initial adhesion position was measured.

### <Measurement of the amount of toluene released>

A double-sided PSA sheet cut to a predetermined size (surface area: 5 cm²) of which the release liners were peeled to expose both PSA sides served as a sample. This sample was introduced into a 20 mL vial bottle and sealed, then, the vial bottle was heated at 80°C for 30 minutes, 1.0 mL of gas in heated state was transferred with a headspace auto sampler to a gas chromatograph (GC) measurement apparatus to measure the amount of toluene, and the amount of toluene released per 1 g of the sample (double-sided PSA sheet containing no release liner) [µg/g] was calculated.
In so doing, the gas chromatograph conditions were as follows:
- Column: DB-FFAP 1.0 µm (0.535 mm diameter x 30 m)
- Carrier gas: He 5.0 mL/min
- Column pressure: 25.4 kPa (40°C)
- Injection port: split (split ratio = 12:1; temperature = 250°C)
- Column temperature: 40°C (0 min) -<+10°C/min>- 90°C (0 min) -<+20°C/min>-250°C (7 min) [meaning, from 40°C. heating to 90°C at a rate of temperature rise of 10°C/min, when 90°C is reached, immediately changing the rate of temperature rise to 20°C/min and heating to 250°C, and then holding at 250°C for 7 minutes]
- Detector: FID (temperature = 250°C).

### <Example 1 >

Into a reaction vessel equipped with a condenser, a nitrogen inlet tube, a thermometer and a stirrer, 40 parts of ion-exchanged water was introduced, and the reaction vessel was purged with nitrogen gas by stirring at 60°C for one hour or longer under nitrogen gas flow. To this reaction vessel, 0.1 parts of 2,2'-azobis[2-(5-methyl-2-imidazoline-2-yl)propane]dihydrochloride (polymerization initiator) was added, while maintaining the system at 60°C, a monomer emulsion was added therein dropwise gradually over three hours to proceed with the emulsion polymerization reaction. As for the monomer emulsion, 10 parts of 2-ethyl hexyl acrylate, 90 parts of butyl acrylate, 4 parts of acrylic acid, 0.07 parts of 3-methacryloyl oxypropyl trimethoxy silane (product name"KBM-503", manufactured by Shin-Etsu Chemical Co., Ltd.), 0.05 parts of n-lauryl mercaptan (chain transfer agent), and 2 parts of polyoxyethylene sodium lauryl sulfate (emulsifier) added to 30 parts of ion exchanged water and emulsified was used. After the dropwise addition of the monomer emulsion was finished, the system was further maintained at 60°C for three hours, and 0.2 parts of hydrogen peroxide water and 0.6 parts of ascorbic acid were added. The system was cooled to room temperature and then the pH was adjusted to 7 by the addition of 10°l0 ammonia water to obtain an acrylic polymer emulsion (water-dispersed acrylic polymer).

Based on solid contents, 30 parts of tackifier emulsion (product name "TAMANOL E-200NT", manufactured by Arakawa Chemical Industries, Ltd.) was added per 100 parts of acrylic polymer contained in the acrylic polymer emulsion. In addition, 10% ammonia water serving as a pH adjuster and polyacrylic acid (product name "ARON B-500" manufactured by Toagosei Co., Ltd.) serving as a tackifier were used to adjust the pH to 7.2 and the viscosity to 10 Pa-s. The viscosity was measured using a B-type viscometer, under the conditions: rotor = so.5; rotation speed = 20 rpm; solution temperature = 30°C; and measurement time = one minute. In this manner, a water-dispersed acrylic PSA composition according to the present example was obtained.

An anchor composition to be used in the present example was readied. That is to say, product name "RC-1023" (solid content concentration: 6%) manufactured by LORD Far East, Inc. was diluted with toluene to adjust the solid content concentration to 1 %.

A PET film of 12 µm in thickness with corona discharge treatment performed on one side (a first side) (product name "Lumirror P60" manufactured by Toray Industries, Inc.) was used as a substrate. The anchor composition was dripped on the first side (the side where corona discharge treatment was performed) of this substrate, spread using Meyer bar # 5, and dried at 80°C for one minute to form a 0.14 µm-thick anchor layer. Through similar operation, a 0.14 µm-thick anchor layer was formed on a second side of the substrate as well. In this manner, a support having an anchor layer on each side of the substrate was obtained.

The PSA composition was coated onto a release liner having a release-treated layer from a silicone release agent (product name "75EPS (M) CREAM Modified" manufactured by Oji Specialty Paper Co., Ltd.) and dried at 100°C for two minutes to form a PSA layer of 50 µm in thickness. Two sheets of this PSA-layered release liner were readied, and the PSA layers thereof were adhered respectively on each side of the support. In this manner, a double-sided PSA sheet was prepared, in which, respectively provided through an anchor layer on each side of the substrate is a PSA layer. Each PSA side of this PSA sheet is protected by the release liner used in the preparation of the PSA sheet, as-is.

### <Example 2>

In the present example, a PET film of 12 µm in thickness with no corona discharge treatment performed (product name "Lumirror S10" manufactured by Toray Industries, Inc.) was used as a substrate and an anchor layer was formed on each side thereof in a similar manner to Example 1 to obtain a support. A double-sided PSA sheet was prepared by adhering a PSA layer respectively on each side of this support in a similar manner to Example 1.

### <Example 3>

In the present example, methylethyl ketone was used in place of toluene as a dilution solvent when preparing the anchor composition. A double-sided PSA sheet was prepared in a similar manner to Example 1 regarding the other points.

### <Example 4>

In the present example, the same substrate as Example 2 was used as-is (that is to say, without providing an anchor layer) as support. A double-sided PSA sheet was prepared by adhering a PSA layer respectively on each side of this support in a similar manner to Example 1.

### <Example 5>

In the present example, the same substrate as Example 1 was used as-is (that is to say, without providing an anchor layer) as support. A double-sided PSA sheet was prepared by adhering a PSA layer respectively on each side of this support in a similar manner to Example 1.

### <Example 6>

A double-sided PSA sheet was prepared in a similar manner to Example 2 except the point that the amount dilution solvent (toluene) used was adjusted in such a way that the solid content concentration of the anchor composition was 0.1%. The thickness of the anchor layer formed on each side of the substrate was 0.01 µm.

### <Example 7>

A double-sided PSA sheet was prepared in a similar manner to Example 2 except the point that the amount dilution solvent (toluene) used was adjusted in such a way that the solid content concentration of the anchor composition was 2%. The thickness of the anchor layer formed on each side of the substrate was 0.69 µm.

For the double-sided PSA sheets according to Examples 1 to 7, the anchoring ability, the cohesive strength and the amount of toluene released were measured or evaluated by the methods mentioned above. The results are shown in Table 1 and Table 2. The results of Example 2 are reproduced in Table 2. In Table 1 and Table 2, "interface detachment" indicates a detachment morphology in which peeling occurs between the adherend and the PSA layer bonded to the adherend (that is to say, the PSA layer on the adherend side and the substrate peel off together), and "anchor-detachment" indicates a detachment morphology in which peeling occurs between the PSA layer bonded to the adherend and the substrate (that is to say, the PSA layer separates from the substrate and remains on the adherend).

**[Table 1]**

| | | Example 1 | Example 2 | Example 3 | Example 4 | Example 5 |
|---|---|---|---|---|---|---|
| Anchor composition | | | | | | |
| | Concentration (wt%) | 1 | 1 | 1 | — | — |
| | ilution solvent | Toluene | Toluene | MEK | — | — |
| Anchor layer thickness (µm) | | 0.14 | 0.14 | 0.14 | Absent | Absent |
| Substrate surface treatment | | Corona | Not done | Corona | Not done | Corona |
| Anchoring ability | | | | | | |
| | Detachment morphology | Interface detachment | Interface detachment | Interface detachment | Anchor-detachment | Anchor-detachment |
| Cohesive strength | | 0.2 mm | 0.2 mm | 0.3 mm | Fallen (anchor-detachment) | Fallen (anchor-detachment) |
| Amount of toluene released (µg/g) | | 1.2 | 1.3 | 1.2 | 0.5 | 0.5 |

**[Table 2]**

| | | Example 6 | Example 2 | Example 7 |
|---|---|---|---|---|
| Anchor composition | | | | |
| | Concentration (wt%) | 0.1 | 1 | 2 |
| Anchor layer thickness (µm) | | 0.01 | 0.14 | 0.69 |
| Substrate surface treatment | | Not done | Not done | Not done |

| Anchoring ability | | | | |
|---|---|---|---|---|
| | Detachment morphology | Interface detachment | Interface detachment | Interface detachment |
| Cohesive strength (mm) | | 0.4 mm | 0.2 mm | 0.3 mm |
| Amount of toluene released (µg/g) | | 1.2 | 1.3 | 1.7 |

As shown in Table 1, with Examples 4 and 5 in which no anchor layer was provided, the detachment morphologies in the anchoring ability evaluation were anchor-detachments regardless of the presence/absence of corona discharge treatment. In contrast, with Examples 1 to 3 in which anchor layers were provided, the detachment morphologies were all interface detachments, demonstrating satisfactory anchoring abilities. Compared to Example 3, which used MEK, the transparency of the anchor composition was higher and the solubility of the anchor layer forming constituent was excellent for Examples 1 and 2, which used toluene as dilution solvent.
Table 2 shows the effects of the thickness of the anchor layer on the properties of the double-sided PSA sheet. For double-sided PSA sheets in which the thicknesses of these anchor layers were 0.01 µm or greater but less than 3.00 µm (more specifically, 0.01 µm or greater but less than 1.00 µm), the detachment morphologies were all interface detachments, demonstrating satisfactory anchoring abilities. Examples 2 and 7, in which the thicknesses of the anchor layers fall in the range of 0.10 µm or greater but less than 1.00 µm, demonstrated even higher cohesive strengths compared to Example 6.

With that, specific examples of the present invention were described in detail; however, these are mere illustrations and do not limit the scope of the claims. The art recited in the claims includes various variations of and modifications to the specific examples illustrated above.

## Claims

1. A double-sided pressure-sensitive adhesive sheet comprising a plastic substrate and a pressure-sensitive adhesive layer provided on each side of the plastic substrate,
the pressure-sensitive adhesive layer being formed from a water-dispersed pressure-sensitive adhesive composition having an acrylic polymer dispersed in an aqueous solvent, and
an anchor layer formed from an anchor composition containing polyester-polyurethane dissolved in an organic solvent being provided between at least a first side of the plastic substrate and the pressure-sensitive adhesive layer.

2. The double-sided pressure-sensitive adhesive sheet according to claim 1, wherein the thickness of the anchor layer is 0.01 µm or greater but less than 3.00 µm.

3. The double-sided pressure-sensitive adhesive sheet according to claim 1 or 2, wherein the anchor composition contains a cross-linking compound having one, two or more species of functional groups selected from an epoxy group, a carboxyl group, an amino group and an amide group, for a total of two or more per molecule.

4. The double-sided pressure-sensitive adhesive sheet according to any one of claims 1 to 3, wherein the anchor composition contains at least one of a chlorinated polyethylene and a chlorinated polypropylene.

5. The double-sided pressure-sensitive adhesive sheet according to any one of claims 1 to 4, wherein the anchor composition contains a polychloroprene.

6. The double-sided pressure-sensitive adhesive sheet according to any one of claims 1 to 5, wherein the plastic substrate is a plastic film having a surface formed from a polymer material comprising polyester, polyolefin, polyphenylene sulfide or polyimide as a main constituent.

7. A method for preparing a double-sided pressure-sensitive adhesive sheet comprising:
preparing a plastic film serving as a substrate,
providing on at least a first side of the substrate an anchor composition containing polyester-polyurethane dissolved in an organic solvent and forming an anchor layer having a thickness of 0.01 µm or greater but less than 3.00 µm on the substrate; and
providing on each side of the substrate where the anchor layer has been formed a pressure-sensitive adhesive layer formed from a water-dispersed pressure-sensitive adhesive composition having an acrylic polymer dispersed in an aqueous solvent.

8. The method according to claim 7, wherein the anchor composition contains at least one of:
(A) a cross-linking compound having one, two or more species of functional groups selected from an epoxy group, a carboxyl group, an amino group and an amide group for a total of two or more per molecule;
(B) at least one of a chlorinated polyethylene and a chlorinated polypropylene; and
(C) polychloroprene.
